# EUROPÄISCHE PATENTSCHRIFT

(11) **EP 2 686 391 B1**
(45) Veröffentlichungstag und Bekanntmachung des Hinweises auf die Patenterteilung: **08.05.2019**
(21) Anmeldenummer: 11719633.7
(22) Anmeldetag: 17.03.2011
(51) Int. Cl.: C09D 5/18, C09K 21/10

(54) **ZUSAMMENSETZUNG FÜR EINE DAMMSCHICHTBILDENDE BRANDSCHUTZBESCHICHTUNG, BRANDSCHUTZBESHICHTUNG, DEREN VERWENDUNG UND HERSTELLUNGSVERFAHREN FUR EINE DAMMSCHICHTBILDENDE BRANDSCHUTZBESCHICHTUNG**
COMPOSITION FOR A FIRE PROTECTION COATING FORMING INSULATING LAYERS, FIRE PROTECTION COATING, USE THEREOF, AND PRODUCTION METHOD FOR A FIRE PROTECTION COATING FORMING INSULATING LAYERS
COMPOSITION POUR UN REVÊTEMENT INTUMESCENT DE PROTECTION CONTRE L'INCENDIE, REVÊTEMENT DE PROTECTION CONTRE L'INCENDIE, SON UTILISATION, ET PROCÉDÉ DE PRODUCTION D'UN REVÊTEMENT INTUMESCENT DE PROTECTION CONTRE L'INCENDIE

(43) Veröffentlichungstag der Anmeldung: 22.01.2014
(73) Patentinhaber: Rudolf Hensel GmbH, 21039 Börnsen (DE)
(72) Erfinder: THEWES, Volker, 21039 Börnsen (DE)
(74) Vertreter: Wachinger, Julian Friedrich
(86) Internationale Anmeldenummer: PCT/IB2011/000603
(87) Internationale Veröffentlichungsnummer: WO 2012/123772

(56) Entgegenhaltungen:
- EP-A2- 0 835 900
- WO-A1-2004/099292
- GB-A- 2 336 163
- DATABASE WPI Week 200921 Thomson Scientific, London, GB; AN 2009-B49040 XP002665319, & CN 101 323 727 A (UNIV DALIAN SCI & TECHNOLOGY) 17. Dezember 2008 (2008-12-17)
- WANG Z ET AL: "Effect of nanoparticles on the improvement in fire-resistant and anti-ageing properties of flame-retardant coating", SURFACE AND COATINGS TECHNOLOGY, ELSEVIER BV, AMSTERDAM, NL, vol. 200, no. 20-21, 22 May 2006 (2006-05-22), pages 5706-5716, XP024995706, ISSN: 0257-8972, DOI: 10.1016/J.SURFCOAT.2005.08.102 [retrieved on 2006-05-22]

## Beschreibung

Gegenstand der Erfindung ist eine Zusammensetzung für eine dämmschichtbildende Brandschutzbeschichtung, bestehend aus mindestens einer Silikonharz-Emulsion und einer Intumeszenz-Komponente. Ferner betrifft die Erfindung eine intumeszierende Brandschutzbeschichtung aus einer solchen Zusammensetzung sowie die Verwendung und ein Herstellungsverfahren dieser Zusammensetzung.

Intumeszierende Brandschutzbeschichtungen, auch Intumescent Coatings (IC) genannt, zeichnen sich dadurch aus, dass sie im Brandfall unter entsprechender Temperatureinwirkung aufschäumen und durch dieses Aufschäumen der vorgenannten Brandschutzbeschichtung der Wärmedurchtritt auf Stahl- und Aluminiumkonstruktionen, Decken, Wände, Kabel, Rohre und dergleichen verhindert oder zumindest behindert wird. Solche IC müssen auf der einen Seite schnell und einfach, das heißt in möglichst wenigen Arbeitsgängen, auf unterschiedlichen Untergründen und Werkstoffen applizierbar sein und dabei kurze Trocknungszeiten aufweisen. Gleichzeitig ist es ein Ziel einer jeden Brandschutzbeschichtung mit möglichst geringen Auftragsmengen möglichst lange Feuerwiderstandszeiten (FWZ) zu erreichen und im übrigen gegen Bewitterungseinflüsse resistent zu sein, was insbesondere bei Konstruktionselementen im Außenbereich hohe Anforderungen an die Brandschutzbeschichtungen stellt. Das gilt ebenfalls für Elemente die in der Werkstatt beschichtet werden (off-site Applikation) und anschließend, häufig bis zur bestimmungsgemäßen Verwendung, zumindest zeitweise oder vollständig im Freien gelagert werden.

Herkömmliche kommerzielle intumeszierende Brandschutzbeschichtungen für konventionelle Konstruktionselemente sind in der Regel einkomponentige IC (1K-IC) auf Wasser- oder Lösungsmittelbasis. Die Bewitterungsstabilität der vorgenannten Beschichtungen, insbesondere der auf Wasser basierenden Beschichtungen, ist gering, wodurch häufig eine zusätzliche Deckbeschichtung appliziert werden muss, wenn die beschichteten Konstruktionselemente der Feuchtigkeit ausgesetzt werden. Obwohl die auf Lösungsmittelbasis hergestellten 1K-IC bewitterungsstabiler sind, als die auf Wasserbasis hergestellten Systeme, benötigen auch diese einen Decklack bei der Anwendung im Außenbereich. Aufgrund der hohen Thermoplastizität dieser 1K-IC sind die resultierenden Isolationsschäume eher weich und instabil, wodurch es häufig zu einem partiellen oder kompletten Abfallen der Isolationsschäume während des Brandes kommt und die FWZ in Folge dessen zu gering ausfällt. Dieser Effekt wird insbesondere bei Hohlkörpern (rechteckige oder kreisrunde Stahlträger und - stützen) sowie bei Wabenträgern bzw. -stützen festgestellt.

Herkömmliche kommerzielle IC für industrielle Konstruktionselemente (on- und offshore) sind in der Regel zweikomponentige IC (2K-IC) auf Basis von Epoxidharzen. Die Applikation der 2K-IC auf Basis von Epoxidharzen ist aufwendig und schwierig, da die Fließeigenschaften dieser Beschichtungssysteme gering sind. Aus diesem Grund werden diese vorgenannten Beschichtungssysteme unter Anwendung von höheren Temperaturen appliziert. Aufgrund der chemischen Vernetzung der 2K-IC auf Epoxidharzbasis weisen diese Beschichtungssysteme vornehmlich duroplastische Eigenschaften auf, welche kontraproduktiv für die Ausbildung einer expandierenden Isolationsschicht sind. Epoxidharze weisen nach der Härtung eine hohe thermische Stabilität auf, wodurch die Beschichtung im Brandfall wenig thermoplastisch ist und sich demzufolge das angestrebte Intumeszenzverhalten nicht oder nur bedingt ausbilden kann. In Folge dessen sind sehr hohe Schichtdicken dieser Brandschutzbeschichtungen notwendig, um die geforderten FWZ erzielen zu können.

Brandschutzbeschichtungen werden beispielsweise in den Druckschriften EP 835 900 A2, WO 2004/099292 A1, GB2336163 A und CN 101323 727 A sowie in der Veröffentlichung von Wang et al. "Effect of nanoparticles on the improvement in fire-resistant and anti-ageing properties of flame-retardant coating", Surface and Coatings Technology, Bd. 200, Nr. 20-21, 22.05.2006, Seiten 5706-5716 beschrieben.

Die der vorliegenden Erfindung zugrundeliegende Aufgabe besteht nun darin, eine Zusammensetzung für eine dämmschichtbildende Brandschutzbeschichtung zur Verfügung zu stellen, die nach der Aufbringung als Brandschutzbeschichtung zum einen eine verbesserte Bewitterungsstabilität aufweist und welche anderseits als sogenannte einkomponentige, intumeszierende Brandschutzbeschichtung die Brandschutzanforderungen an industrielle Konstruktionselemente (Hydrocarbon Fire) erfüllt und gleichzeitig verbesserte Feuerwiderstandszeiten (FWZ) bei geringen Schichtdicken auf unterschiedlichen Werkstoffen und Untergründen liefert.

Diese Aufgabe wird durch eine Zusammensetzung für eine wässerige dämmschichtbildende Brandschutzbeschichtung gemäß Anspruch 1, durch eine Brandschutzbeschichtung gemäß Anspruch 10, durch die Verwendung einer erfindungsgemäßen Zusammensetzung gemäß Anspruch 11 sowie ein Herstellungsverfahren nach Anspruch 12 gelöst.

Eine erfindungsgemäße Zusammensetzung weist hierfür mindestens eine Silikonharz-Emulsion als Bindemittel und ein im Brandfall schaumbildendes Mittel auf. Eine aus einer solchen Zusammensetzung hergestellte Brandschutzbeschichtung der eingangs genannten Art, insbesondere eine sogenannte einkomponentige intumeszierende Brandschutzbeschichtung, weist aufgrund der stark hydrophoben Eigenschaften von Silikonharz-Emulsionen eine verbesserte Bewitterungsstabilität gegenüber den herkömmlichen einkomponentigen Brandschutzmitteln auf. Außerdem werden aufgrund der guten Thermoplastizität von Bindemitteln mit Silikonharzen gleichzeitig hohe Expansionswerte der isolierenden Schaumschichten im Brandfall generiert. Die erzielten Feuerwiderstandszeiten FWZ sind im Vergleich zu den kommerziellen Systemen aus dem Stand der Technik deutlich verbessert, wodurch geringere Schichtdicken für die Erreichung einer definierten FWZ notwendig werden.

Die erfindungsgemäße wässerige dämmschichtbildende Brandschutzbeschichtung enthält einen Wasseranteil von mindestens 2 Gew.-% bezogen auf 100 Gew.-% Gesamtrezeptur. Der Wasseranteil bezogen auf 100 Gew.-% Gesamtrezeptur kann aber auch ≥ 5 Gew.-%, ≥ 8 Gew.-% oder höher liegen.

Die Kombination der gefundenen Eigenschaften ermöglicht insbesondere die Verwendung der erfindungsgemäßen Zusammensetzung für eine Brandschutzbeschichtung in streich-, spritz- oder rollfähigen Anstrichmitteln zum Schutz von unterschiedlichsten Untergründen sowie von konventionellen und industriellen Konstruktionselementen, vorzugsweise von Stahl, Aluminium, Holz, Beton, Elektrokabeln und Rohren, oder für die Beschichtung von offenen Stahlprofilen, geschlossenen und/oder wabenförmigen Profilen, oder für Werkstattapplikationen (off-site Applikation).

Außerdem hat sich überraschenderweise herausgestellt, dass die sich ausbildenden Isolationsschichten aufgrund der Silikonharz-Bindemittelkomponente eine sehr hohe mechanische Stabilität aufweisen, wodurch die Brandschutzleistung auf zum Beispiel Hohl- und Wabenprofilen signifikant verbessert wird. Insbesondere wird das partielle Abfallen der Isolationsschicht an den Kanten eines Wabenprofils oder Hohlkörpers bei Verwendung der erfindungsgemäßen Zusammensetzung oder Brandschutzbeschichtung verhindert. Ebenfalls wird die typischerweise stark ausgeprägte Rissbildung der Dämmschicht bei der Verwendung von Hohlkörpern oder Wabenprofilen durch die erfindungsgemäße Zusammensetzung verhindert.

Aufgrund der besonderen mechanischen Stabilität der aus einer erfindungsgemäßen Zusammensetzung hergestellten Dämmschicht erfüllt die Brandschutzbeschichtung mit einer Silikonharz-Bindemittelkomponente auch die Anforderungen eines Hydrokarbon-Brandes nach UL1709 (UL = Underwriters Laboratories).

Die erfindungsgemäße Zusammensetzung für eine dämmschichtbildende Brandschutzbeschichtung kann erfindungsgemäß durch ein Verfahren hergestellt werden, in dem eine Silikonharz-Emulsion als ein Bindemittel mit einem im Brandfall schaumbildenden Mittel in einem hochscherenden Dissolver vermischt werden.

Die abhängigen Ansprüche sowie die nachfolgende Beschreibung enthalten besonders vorteilhafte Ausgestaltungen und Weiterbildungen der Erfindung, wobei explizit darauf hingewiesen wird, dass die erfindungsgemäße Brandschutzbeschichtung sowie die Verwendung der Zusammensetzung und das Herstellungsverfahren für die Zusammensetzung auch entsprechend den abhängigen Ansprüchen zur erfindungsgemäßen Zusammensetzung für eine dämmschichtbildende Brandschutzbeschichtung weitergebildet sein kann und umgekehrt.

Gegenstand der Erfindung ist unter anderem eine Zusammensetzung für eine dämmschichtbildende, d.h. eine intumeszierende Beschichtung für den Brandschutz, bestehend aus mindestens einer Silikonharz-Emulsion und einem im Brandfall schaumbildenden Mittel, auch intumeszierendes Mittel genannt. Solche intumeszierenden Mittel sind bevorzugt Feststoff-Additive, welche auch in Kombination mit einer Pigmentierung verwendet werden können. Erfindungsgemäß können alle intumeszierende Mittel eingesetzt werden, solange sie kompatibel mit dem Bindemittel, in diesem Fall insbesondere mit der eingesetzten Silikonharzkomponente, sind. In einer Ausführungsform kann die intumeszierenden Komponente aus einer säurebildenden Substanz, d.h. einem Säurespender, einer kohlenstoffbildenden Substanz, d.h. einer Kohlenstoffquelle, und aus einem Treibmittel, d.h. einem Gasbildner, bestehen. Bevorzugte Beispiele solcher Komponenten werden später detaillierter erläutert.

In den erfindungsgemäßen Zusammensetzungen bevorzugt eingesetzte Silikonharz-Emulsionen enthalten einen organischen Lösungsmittelanteil von kleiner als 25% (Gewichtsprozent bezogen auf 100% Dispersion). Dadurch wird ein relativ schnelles physikalisches Trocknen nach der Auftragung der Zusammensetzung auf das zu schützende Werkstück oder Konstruktions-Bauteil ermöglicht. Die meisten verwendeten Lösungsmittel sind auf organischer Basis und dementsprechend mehr oder weniger schädlich für die Umwelt und die Gesundheit. Alternativ zu Silikonharz-Emulsionen mit einem Anteil an organischen Lösungsmitteln, können auch Silikonharz - Emulsionen verwendet werden, die ausschließlich Wasser als Lösungsmittel enthalten.

Bei den organischen Lösungsmitteln handelt es sich vorzugsweise, aber nicht ausschließlich um:
- aromatische Kohlenwasserstoffe, hierbei bevorzugt Xylol und/oder Alkylbenzole, hierbei bevorzugt Ethylbenzol;
- Alkohole, hierbei bevorzugt Methanol und/oder Alkanole, besonders bevorzugt 2-Methyl-1-propanol;
- Polyether, hierbei bevorzugt Polyglykolether, besonders bevorzugt alpha-isotridecyl-omega-hydroxy-polyglykolether.

Bei den in der erfindungsgemäßen intumeszierenden Beschichtung verwendeten Silikonharz-Emulsionen handelt es sich zum Beispiel um Polysiloxane, Silan-Siloxan-Mischungen oder modifizierten Polysiloxanen vorzugweise, aber nicht ausschließlich, um Dispersionen von Phenyl- und/oder Methylgruppen-modifizierten Polysiloxanharzen. Die erfindungsgemäße intumeszierende Beschichtung kann sowohl ausschließlich auf Basis einer Silikonharz-Emulsion als Bindemittel hergestellt werden. Alternativ kann aber auch eine Silikonharz-Emulsion in Kombination mit weiteren filmbildenden, wässerigen, organischen Polymerdispersionen eingesetzt werden. Hierbei sind beliebige Mischungsverhältnisse denkbar, solange die Polymerkomponenten mit einander verträglich sind.

Die bevorzugt verwendeten Silikonharz - Emulsionen weisen zum Beispiel einen Festkörpergehalt von ≥ 35-Gew-%, eine Dichte (bei T=25°C) von ≥ 0,80 g/cm³, eine Viskosität (bei T=25°C) von ≥10 mPa*s und einen Flammpunkt von ≥ 15°C auf. Der Festkörpergehalt kann aber auch bei ≥ 40-Gew-%, ≥ 50-Gew-%, oder höher liegen. Die Dichte (bei T=25°C) kann hierbei aber auch bei ≥ 0,85 g/cm³, ≥ 0,90 g/cm³, oder höher liegen. Bevorzugt liegt die Viskosität (bei T=25°C) ≥20 mPa*s, ≥30 mPa*s, ≥50 mPa*s oder höher. Bevorzugte Flammpunkte liegen bei ≥ 20°C, ≥ 25°C, ≥ 30°C, ≥ 40°C, ≥ 50°C oder höher.

Bei den in den bevorzugt verwendeten Silikonharz - Emulsionen eingesetzten Emulgatoren handelt es sich vorzugweise, aber nicht ausschließlich um nichtionische Emulgatoren.

Die erfindungsgemäßen Silikonharz - Emulsionen enthalten einen Anteil von < 15% Triethoxy (2,4,4 - trimethlypentyl) silan bzw. Trimethoxy (2,4,4 - trimethlypentyl) silan, bevorzugt <5% und einen Anteil von < 10% Tridecanolethoxylate, bevorzugt < 5%.

Dabei weisen die bevorzugt verwendeten Phenylmethylpolysiloxanharze im Allgemeinen eine gute Verträglichkeit mit organischen Polymerdispersionen auf. Bei diesen organischen Polymerdispersionen handelt es sich vorzugsweise, aber nicht ausschließlich, um

Homopolymerisate auf Basis von Vinylacetat,
Copolymerisate auf Basis von Vinylacetat, Ethylen und Vinylchlorid,
Copolymerisate auf Basis von Vinylacetat und dem Vinylester einer oder mehrerer langkettiger, verzweigter Carbonsäuren,
Copolymerisate auf Basis von Vinylacetat und Maleinsäure-di-n-Butylester,
Copolymerisate auf Basis von Vinylacetat und Acrylsäureester,
Copolymerisate auf Basis von Styrol und Acrylsäureester,
Copolymerisate auf Basis von Acrylsäureester,
Copolymerisate auf Basis Vinyltoloul und Acrylsäureester,

Neben den zuvor genannten Silikonharz - Emulsionen können auch solche Silikonharz Systeme - wie feste Silikonharze, Silikonölemlusionen, Silikon-Copolymere, Silikonkonzentrate, Silikonharzlösungen, funktionelle Silikonöle und Silane - als Bindemittel verwendet werden, soweit diese mit Wasser verdünnbar oder mischbar sind öder in Wasser gelöst werden können.

Die Zusammensetzung für eine intumeszierende Brandschutzbeschichtung enthält säurespendende Substanzen. Bei den Säurespendern handelt es um Ammoniumsalze von Phosphorsäuren und/oder Polyphosphorsäuren. Ganz besonders bevorzugt werden als säurespendende Substanzen Ammoniumpolyphosphate der Formel (NH₄PO₃)ₙ verwendet, worin n eine Zahl von 10 bis ≥ 1000, bevorzugt zwischen 200 bis ≥ 1000 bedeutet.

Beispiele für kohlenstoffbildende Substanzen sind dem Fachmann bekannt, wobei besonders bevorzugt Kohlenhydrate, wie zum Beispiel Pentaerythrit, Dipentaerythrit, Tripentaerythrit und/oder Polykondensate des Pentaerythrits und/oder Mischungen aus Pentaerythrit basierenden Estern und Polyolen, eingesetzt werden können. Zusätzlich können als Kohlenstoffquelle Stärke und Blähgraphit umfassende Gruppen verwendet werden.

Treibmittel sind Gasbildner, die bei thermischer Zersetzung nicht brennbare Gase freisetzen. Beispiele für Treibmittel sind Melamin und/oder Guanidin sowie deren Salze und/oder Harnstoffverbindungen und/oder Dicyandiamide, sowie Tris(hydroxyethyl)isocyanurat und dessen Derivate. Das bevorzugt verwendete Treibmittel ist Melamin. Bevorzugt handelt es sich bei den Melaminsalzen um Melaminphoshat, Melamincyanurat, Melaminborat, Melaminpolyphosphat, Melaminsilikat und bei dem Guanidinsalz um Guanidinphosphat. Neben den halogenfreien Gasbildnern können auch halogenhaltige Verbindungen wie z.B. Chlorparaffine (CP) verwendet werden. Neben den gasbildenden Eigenschaften wirken die CP zusätzlich als Flammschutzmittel in der Gasphase, indem die radikale Kettenreaktion des Verbrennungsprozesses unterbrochen wird.

Neben diesen schaumbildenden Komponenten können in der erfindungsgemäßen Zusammensetzung sowie Brandschutzbeschichtung weitere Komponenten enthalten sein, welche eine spezielle Anpassung der Beschichtung an den jeweiligen Einsatzzweck ermöglichen. Nicht abschließend aufgezählte Beispiele solcher zusätzlichen Komponenten sind übliche Hilfs- und Zusatzstoffe wie z.B. Pigmente - bevorzugt Titandioxid - Glasfasern, Mineralfasern, Kaolin, Talkum, Aluminiumoxid, Aluminiumhydroxid, Magnesiumhydroxid, Fällungskieselsäuren, Silikate und/oder pulverisierte Cellulosen, Weichmacher, Filmbildehilfsmittel, Thixotropiermittel, Netz- und Dispergiermittel und/oder Konservierungsmittel.

Weiterhin kann die Zusammensetzung für eine intumeszierende Brandschutzbeschichtung gemäß der Erfindung als Zusatzstoff ein Phosphinsäuresalz der Formel (I) und/oder ein Diphosphinsäuresalz der Formel (II) und/oder deren Polymere enthalten, 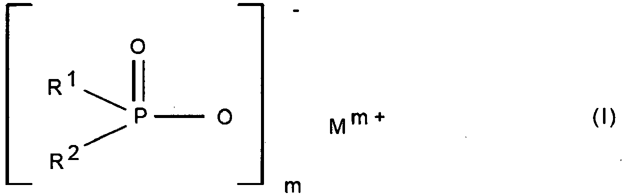 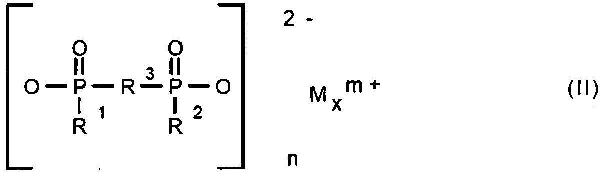 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder-Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl. Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n- Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.- Butylnaphthylen; Phenylmethylen, Phenylethylen, Phenylpropylen oder Phenylbutylen.

Durch die Verwendung der vorgenannten Phosphinsäuresalze bzw. Diphosphinsäuresalzen wird die Starttemperatur der intumeszierenden Reaktion um mehr als 15°C - im Vergleich zur Phosphinsäuresalz freien Rezeptur - reduziert.

Die erfindungsgemäße Zusammensetzung kann zur Herstellung einer gegenüber den herkömmlichen einkomponentigen, intumeszierenden Brandschutzbeschichtungen verbesserten Beschichtung eingesetzt werden. Eine solche Brandschutzbeschichtung wird gewöhnlich durch physikalisches Trocknen einer Schicht einer der vorstehend detailliert erläuterten erfindungsgemäßen Zusammensetzung hergestellt. Dies geschieht bevorzugt durch Verdunsten des Lösungsmittels oder eines Teils des in der Dispersion enthaltenen Lösungsmittels. Dabei bleibt eine zusammenhängende Beschichtung mit mindestens einem Silikonharz als Bindemittel zurück, welche die vorstehend beschriebenen verbesserten Eigenschaften hinsichtlich der Bewitterungsbeständigkeit, der Feuerwiderstandszeit und der mechanischen Festigkeit der isolierenden Schaumschicht gegenüber den herkömmlichen Beschichtungen aufweist.

Die Zusammensetzung gelangt zur Herstellung einer solchen intumeszierenden Brandschutzbeschichtung bevorzugt in Form eines streich-, spritz- oder rollfähigen Anstrichmittels zum Schutz von unterschiedlichsten Untergründen, vorzugsweise von Stahl, Aluminium, Holz, Beton, Elektrokabeln und Rohren, zum Einsatz. Insbesondere ist die erfindungsgemäße Zusammensetzung für eine intumeszierende Brandschutzbeschichtung geeignet für den konstruktiven Brandschutz von Hohl- und Wabenprofilen, sowie im Bereich der Werkstattapplikation und in Bereichen, in denen eine erhöhte Bewitterungsstabilität gefordert ist.

Eine beispielhafte Rezeptur für die erfindungsgemäße Zusammensetzung für eine dämmschichtbildende Brandschutzbeschichtung lautet:
1 bis 75 Gewichtsteile eines filmbildenden Bindemittels,
5 bis 50 Gewichtsteile einer säurespendenden Substanz,
5 bis 25 Gewichtsteile einer kohlenstoffbildenden Substanz,
5 bis 25 Gewichtsteile eines Treibmittels und
10 bis 50 Gewichtsteile an üblichen Hilfs- und Zusatzstoffen.

Besonders bevorzugt enthält die Zusammensetzung:
5 bis 61 Gewichtsteile eines filmbildenden Bindemittels,
10 bis 40 Gewichtsteile einer säurespendenden Substanz,
7 bis 15 Gewichtsteile einer kohlenstoffbildenden Substanz,
7 bis 15 Gewichtsteile eines Treibmittels und
15 bis 40 Gewichtsteile an üblichen Hilfs- und Zusatzstoffen.

Diese Rezepturen können zum Beispiel in dem erfindungsgemäßen Herstellungsverfahren für eine Zusammensetzung für eine dämmschichtbildende Brandschutzbeschichtung eingesetzt werden. In dem Herstellungsverfahren kann eine Silikonharz-Emulsion als ein Bindemittel mit einem im Brandfall schaumbildenden Mittel und optionalen weiteren Hilfs- und Zusatzstoffen in einem hochscherenden Dissolver vermischt werden. Bei der Behandlung der Zusammensetzung in dem hochscherenden Dissolver kann die Rührgeschwindigkeit, die Dispergierzeit und die Behälterdimensionen in der Art abgestimmt sein, dass die Temperatur der Zusammensetzung von T=50°C bis T=40°C während des gesamten Herstellprozesses nicht überschritten wird.

Die Herstellung der erfindungsgemäßen Zusammensetzung für eine dämmschichtbildende Brandschutzbeschichtung findet bevorzugt in der Form statt, dass
a) das-Lösungsmittel und die Lackadditive wie Dispergiermittel, Konservierungsmittel und Entschäumer unter Verrühren vorgelegt werden,
b) die Feststoff-Additive Säurespender, Treibmittel und Kohlenstoffquelle sowie Titandioxid und Füllstoffe unter Rühren mit niedriger Drehzahl eingestreut werden,
c) das Thixotropiermittel anschließend unter Rühren eingestreut wird,
d) mindestens 15 Minuten dispergiert und dabei eine Temperatur von T=50°C, bevorzugt T=45°C, weiter bevorzugt T=40°C nicht überschritten wird und anschließend
e) das/die Bindemittel unter Rühren eingeflossen wird/werden, und
f) das Filmbildehilfsmittel - wenn notwendig - unter Rühren zudosiert wird, und abschließend
g) mindestens 5 Minuten homogen dispergiert - Umfangsgeschwindigkeit der Dissolverscheibe 18 - 25 m/s - und die gewünschte Viskosität durch Zugabe von Lösungsmittel eingestellt wird.

Sollte die unter a) zugesetzte Menge an Lösungsmittel eine ausreichende Dispergierung der Feststoffadditive nicht ermöglichen, zeichnen sich die Silikonharz-Emulsionen auch dadurch aus, dass diese aufgrund ihrer hohen Scherstabilität alternativ auch direkt in die Vorlage eingearbeitet werden können.

Bei den zur Herstellung der erfindungsgemäßen Beschichtung bevorzugt verwendeten Dissolvern handelt es sich um einen Scheibenrührer, bei dem an einer senkrechten Rührwelle eine mit Zähnen besetzte Dissolverscheibe angebracht ist. Die bei der Drehbewegung der Scheibe entstehenden Scherkräfte zerkleinern die miteinander assoziierten Feststoffteilchen, wobei eine für eine ausreichend gute Kraftübertragung das Größenverhältnis von Dissolverscheibe und Rührbehälter, sowie die Drehzahl und Füllhöhe beachtet werden muss. Dabei ist die Herstellungsweise so durchzuführen, dass die Brandschutzbeschichtung in eine rollende, turbulenzfreie Bewegung (Doughnut-Effekt) versetzt wird und die dispergierten kleinen Feststoffteilchen gegen eine erneute Zusammenlagerung stabilisiert werden. Die besten Dispergierergebnisse werden erzielt, wenn bei hoher mechanischer Rührleistung der Doughnut-Effekt stabil bleibt. Bevorzugt sollte der Behälterdurchmesser eine Größe aufweisen, die zwischen dem 1,3 bis 3 fachen des Durchmessers der Dissolverscheibe liegt. Die Füllhöhe des Behälters sollte nicht das Doppelte des Dissolverscheibendurchmessers überschreiten.

Die folgenden Beispiele dienen der weiteren Erläuterung der Erfindung. Sie sollen dazu dienen, dass der Fachmann Hinweise erhält, in welchen Anteilen oder Kombinationen die Komponenten eingesetzt werden können und ihre Vorteile bezüglich bestimmter Eigenschaften erhalten. Insbesondere ist in den Beispielen angedacht, die erfindungsgemäßen Produkte mit herkömmlichen Produkten bezüglich ihrer physikalischen Eigenschaften zu vergleichen. Auf keinen Fall sollen aber die Beispiele die Erfindung auf diese speziellen Konzentrationen und Kombinationen einschränken.

In den nachfolgenden Beispielen wurden unter anderem die folgenden Produkte eingesetzt:
Silikophen® P40/W (Evonik Tego Chemie GmbH)
   Es handelt sich um eine ca. 50%-ige wässerige nicht ionische Dispersion eines Phenylmethylpolysiloxanharzes mit einem Lösungsmittelanteil von 12% Xylol.
Silres® MP 50 E (Wacker Silicones)
   Es handelt sich um eine ca. 50%-ige wässerige Dispersion eines Phenylmethylpolysiloxanharzes mit einem Lösungsmittelanteil von 8% Xylol.
Silres® SB 45 E (Wacker Silicones)
   Es handelt sich um eine ca. 50%-ige wässerige, mit Wasser verdünnbare, lösemittelfreie Silikonharzemulsion.
Epilox® T 19-38/700 (Leuna Harze)
   Es handelt sich um ein modifiziertes, niedrig viskoses Epoxid Harz, welches kristallisationsfrei ist. Die Vernetzung mit geeigneten Härtern findet bevorzugt bei Raumtemperatur statt. Das Epoxid Äquivalent Gewicht beträgt 180-200g.
Epilox®- Härter M 972 (Leuna Harze)
   Es handelt sich um ein niederviskoses lösemittelfreies Polyaminoamid - Addukt für lösemittelfreie und lösemittelarme Lackharzsysteme sowie Beschichtungen. Das Amin Äquivalent Gewicht beträgt 115g.
Mowilith® DM230 (Celanese Emulsions GmbH)
   Es handelt sich um eine ca. 50 %-ige, weichmacherfreie, wässerige Copolymerisat-Dispersion aus Vinylacetat und Versaticsäureester.
VINNAPAS® EZ 3010 (Wacker Chemie AG)
   Es handelt sich um eine ca. 55%-ige, weichmacher- und lösungsmittelfreie wässrige Polymerdispersion, hergestellt aus den Monomeren Vinylacetat und Ethylen.
Exolit® AP 462 (Clariant GmbH, Frankfurt am Main)
   Es handelt sich um ein mikroverkapseltes Ammoniumpolyphosphat auf Basis Exolit® AP 422, das nach dem Verfahren der EP-B-0 180 795 hergestellt wurde und etwa 10 Masse-% Kapselmaterial, bestehend aus einem gehärteten Melamin/Formaldehyd-Harz, enthält.
Bei Exolit® AP 422 (Clariant GmbH, Frankfurt am Main) handelt es sich um ein freifließendes, pulverförmiges, in Wasser schwer lösliches Ammoniumpolyphosphat der Formel (NH4PO3) mit n = 20 bis 1000, insbesondere 500 bis 1000. Der Anteil der Teilchen mit einer Teilchengröße kleiner 45 µm beträgt mehr als 99 %.
Exolit® OP 1230 (Clariant GmbH, Frankfurt am Main)
   Bei Exolit® OP 1230 handelt es sich um ein feinkörniges, nicht hygroskopisches und in Wasser und gängigen organischen Lösungsmitteln unlösliches Pulver auf Basis eines organischen Phosphinates.
Charmor® PM 40
   Es handelt sich um ein kristallines, freifließendes und pulverförmiges Pentaerythrit der Formel (C₅H₁₂O₄).

### Allgemeines:

In den folgenden Beispielen wurden Zusammensetzungen für intumeszierende Beschichtungen hergestellt, auf Normstahlplatten sowie Hohl- und Wabenprofilen aufgetragen und ihre Wirksamkeit nach folgenden Normen ermittelt.

Die Prüfung der Isolierfähigkeit erfolgte nach ISO834 und UL1709.

Die Bewitterungsstabilität wurde durch eine 6-monatige Freibewitterung (Standort 21039 Börnsen) untersucht. Nach Bewertung der Oberfläche wurden die Stahlplatten einer Brandprüfung analog ISO834 unterzogen. Diese Bewitterungsstabilitätsprüfung wurde mit einer Trockenfilmdicke von 1000µm durchgeführt.

### Beispiel 1 (Vergleichsbeispiel ISO834):

Es wurden folgende Substanzen nacheinander mittels eines hochscherenden Dissolvers vermischt und anschließend mittels Airless Applikation auf die entsprechenden Prüfkörper aufgetragen.
25 Gewichtsteile Exolit® AP462
20 Gewichtsteile Mowilith® DM230
8 Gewichtsteile Melamin
8 Gewichtsteile Charmor PM 40
8 Gewichtsteile Titandioxid
ad 100 Gewichtsteile Wasser, Füll- und Hilfsstoffe.

Die Herstellung der Rezeptur wurde in der Form durchgeführt, dass die Feststoffe bei einer niedrigen Drehzahl in die flüssige Vorlage eingerührt wurden und anschließend die vollständige Dispergierung der Brandschutzbeschichtung bei einer Umfangsgeschwindigkeit der Dissolverscheibe von 18 - 25 m/s erfolgte. Dabei wurde darauf geachtet, dass während der Dispergierung ein stabiler Doughnut - Effekt sich ausbildete und die Temperatur in der Beschichtung T=40°C nicht überschritten wurde.

Die Applikation der Brandschutzbeschichtung würde in den Beispielen bei Raumtemperatur (T = 20°C) mit einer Airless-Pumpe der folgenden Konfiguration durchgeführt, wobei dies zweckmäßige Applikationsbedingungen für eine erfindungsgemäße Anwendung darstellen:
▪ Materialdruck ca. 200 bar
▪ Förderleistung > 4l/min
▪ Schlauchdurchmesser ⅜ Zoll - Schlauchlänge < 20m
▪ Schlauchpeitsche ½ Zoll
▪ Spritzdüse zwischen 0,017 - 0,025 Zoll
▪ Filter wurden in der Airless-Pumpe und der Spritzpistole belassen

Die Applikation der Beschichtung erfolgte bis zu einer Nassauftragsmenge von 1000g/m² in einem Arbeitsgang, Bei mehreren Applikationsgängen wurde eine Trocknungszeit von mindestens 24 Stunden bis zum nächsten Arbeitsgang eingehalten.

Bevor die Applikation auf Stahloberflächen erfolgte, wurde eine Vorbehandlung durch Strahlen (SA ½) nach DIN EN ISO 12944-4 und die Applikation einer Grundierung von ca. 40 - 60µm Trockenschichtdicke und einer anschließenden Trocknungszeit von 24 Stunden durchgeführt.

Die Brandprüfung einer Stahlplatte (4.95 x 495 x 5mm) analog ISO834 ergab eine Feuerwiderstandszeit von 67 Minuten (T_{kritisch} = 500°C). Der Start der intumeszierenden Reaktion wurde mit T=225°C (gemessen auf der Plattenrückseite) registriert. Die Stabilität der entstandenen Schaumstruktur war gering und nicht schnittfest. Die gleiche Rezeptur ergab nach einer 6- monatigen Freibewitterung nur noch eine Feuerwiderstandszeit von 51 Minuten. Diese Brandprüfungen wurden mit einer Trockenfilmdicke von 1000µm durchgeführt.

Die gleiche Rezeptur, appliziert mit einer Trockenschichtdicke von 2000µm auf einer Rundstütze (Profilfaktor U/A=165m⁻¹), führte zu keiner zufriedenstellenden Brandschutzleistung, da die expandierende und isolierende Schaumschicht bis zur Stahloberfläche aufriss und somit zu einer signifikanten Reduzierung der FWZ geführt hat.

Die gleiche Rezeptur, appliziert mit einer Trockenschichtdicke von 1500µm auf einem Wabenprofil (Profilfaktor U/A=152m⁻¹), führte zu keiner zufriedenstellenden Brandschutzleistung, da die expandierende und isolierende Schaumschicht an den Lochkanten aufriss und somit die Stahloberfläche frei gelegt wurde.

### Beispiel 2 (Vergleichsbeispiel UL1709):

Es wurde eine zweikomponentige auf Epoxidharzen basierende Brandschutzbeschichtung mittels eines hochscherenden Dissolvers unter vergleichbaren Bedingungen wie in Beispiel 1 - Ausnahme höhere Temperaturen von T= ca. 60°C und ohne Verwendung von Lösungsmitteln - und mit folgenden Komponenten hergestellt.
Komponente A:
   35 Gewichtsteile Bisphenol A/F-Harz
   8 Gewichtsteile Phosphorsäureester
   30 Gewichtsteile Borsäure
   8 Gewichtsteile Exolit AP422
   6 Gewichtsteile Charmor PM 40
   ad 100 Gewichtsteile Füll- und Hilfsstoffe
Komponente B:
   55 Gewichtsteile Polyamine Härter
   4 Gewichtsteile Titandioxid
   5 Gewichtsteile Exolit AP422
   3 Gewichtsteile Charmor PM 40
   ad 100 Gewichtsteile Füll- und Hilfsstoffe

Die Komponenten A und B wurden entsprechend ihrer Epoxid- bzw. Aminäquivalenz miteinander vermischt und mittels eines Rakels auf einer Stahlplatte mit einer Trockenschichtdicke von 5mm appliziert. Die Brandprüfung einer Stahlplatte (495 x 495 x 5mm) analog UL1709 ergab eine Feuerwiderstandszeit von 60 Minuten. Nach einer Freibewitterung von 6 Monaten wurde keine Reduzierung der Feuerwiderstandszeit festgestellt.

### Beispiel 3 (Erfindung):

Es wurden folgende Substanzen nacheinander mittels eines hochscherenden Dissolvers wie in Beispiel 1 beschrieben vermischt und anschließend mittels Airless Applikation unter den gleichen Bedingungenwie in Beispiel 1 beschrieben auf die entsprechenden Prüfkörper aufgetragen.
35 Gewichtsteile Exolit AP422
12 Gewichtsteile Silres MP 50 E
11 Gewichtsteile Charmor PM 40
10 Gewichtsteile Melamin
10 Gewichtsteile Titandioxid
ad 100 Gewichtsteile , Füll- und Hilfsstoffe.

Diese Rezeptur zeichnet sich dadurch aus, dass sie keine zusätzliche Wassermenge zur Herstellung benötigt und die Dispergierung der Pulver direkt im Bindemittel erfolgen kann. Dadurch kommt es zu einer signifikanten Erhöhung des Festkörpergehalts per Volumen bzw. Gewicht im Vergleich zu den konventionellen 1-kompönentigen Brandschutzbeschichtungen auf wässeriger oder LösungsmittelBasis.

Die Brandprüfung einer Stahlplatte (495 x 495 x 5mm) analog ISO834 ergab eine Feuerwiderstandszeit von 82 Minuten (T_{kritisch} = 500°C). Die entstandene Schaumstruktur war sehr stabil und schnittfest. Die gleiche Rezeptur ergab nach einer 6-monatigen Freibewitterung noch eine Feuerwiderstandszeit von 65 Minuten. Diese Brandprüfungen wurden mit einer Trockenfilmdicke von 1000µm durchgeführt.

Im Vergleich zur Referenz (Beispiel 1) wurde eine Verbesserung der Leistungsfähigkeit von 22% (Nullprobe) und 27% (nach Bewitterung) erzielt.

Die gleiche Rezeptur, appliziert mit einer Trockenschichtdicke von 2000µm auf einer Rundstütze (Profilfaktor U/A=160m⁻¹), führte zu einer 30-minütigen Brandschutzleistung, da die expandierende isolierende Schaumschicht nicht aufriss.

### Beispiel 4 (Erfindung):

Es wurden folgende Substanzen nacheinander mittels eines hochscherenden Dissolvers vermischt und anschließend mittels Airless Applikation auf die entsprechenden Prüfkörper aufgetragen. Hierbei wurden die gleichen Bedingungen wie in Beispiel 1 angewendet.
24 Gewichtsteile Exolit AP422
2 Gewichtsteile Exolit OP1230
13 Gewichtsteile Vinnapas EZ 3010
13 Gewichtsteile Silikophen P40/W
8 Gewichtsteile Charmor PM40
6 Gewichtsteile Melamin
10 Gewichtsteile Titandioxid
ad 100 Gewichtsteile Wasser, Füll- und Hilfsstoffe.

Die Brandprüfung einer Stahlplatte (495 x 495 x 5mm) analog ISO834 ergab eine Feuerwiderstandszeit von 85 Minuten (T_{kritisch} = 500°C). Der Start der intumeszierenden Reaktion wurde mit T=183°C (gemessen auf der Plattenrückseite) registriert, was einer Reduzierung von T=42°C im Vergleich zur Referenz (Beispiel 1) entspricht. Die entstandene Schaumstruktur war sehr stabil und schnittfest. Die gleiche Rezeptur ergab nach einer 6-monatigen Freibewitterung noch eine Feuerwiderstandszeit von 82 Minuten. Diese Brandprüfungen wurden mit einer Trockenfilmdicke von 1000µm durchgeführt. Im Vergleich zur Referenz (Beispiel 1) wurde eine Verbesserung der Leistungsfähigkeit von 27% (Nullprobe) und 61% (nach Bewitterung) erzielt.

Die gleiche Rezeptur appliziert mit einer Trockenschichtdicke von 1500µm auf einem Wabenprofil (U/A=152m⁻¹) führte zu einer 60-minütigen Brandschutzleistung, da die expandierende isolierende Schaumschicht an den Lochkanten nicht aufriss.

### Beispiel 5 (Erfindung):

Es wurden folgende Substanzen nacheinander mittels eines hochscherenden Dissolvers vermischt und anschließend mittels Airless Applikation auf die entsprechenden Prüfkörper wie in Beispiel 1 beschrieben aufgetragen.
35 Gewichtsteile Exolit AP462
26 Gewichtsteile Silres MP 50 E
11 Gewichtsteile Charmor PM 40
9 Gewichtsteile Melamin
13 Gewichtsteile Titandioxid
ad 100 Gewichtsteile Füll- und Hilfsstoffe.

Diese Rezeptur zeichnet sich dadurch aus, dass sie keine zusätzliche Wassermenge zur Herstellung benötigt und die Dispergierung der Pulver direkt im Bindemittel erfolgen kann. Dadurch kommt es zu einer signifikanten Erhöhung des Festkörpergehalts per Volumen bzw. Gewicht im Vergleich zu den konventionellen 1-komponentigen Brandschutzbeschichtungen auf Basis Wasser bzw. Lösungsmittel.

Die Brandprüfung einer Stahlplatte (495 x 495 x 5mm) analog ISO834 ergab eine Feuerwiderstandszeit von 79 Minuten (T_{kritisch} = 500°C). Die entstandene Schaumstruktur war sehr stabil und besonders schnittfest. Die gleiche Rezeptur ergab nach einer 6-monatigen Freibewitterung noch eine Feuerwiderstandszeit von 66 Minuten. Diese Brandprüfungen wurden mit einer Trockenfilmdicke von 1000µm durchgeführt. Im Vergleich zur Referenz (Beispiel 1) wurde eine Verbesserung der Leistungsfähigkeit von 18% (Nullprobe) und 29% (nach Bewitterung) erzielt.

Die Brandprüfung einer Stahlplatte (495 x 495 x 5mm) analog UL1709 ergab eine Feuerwiderstandszeit von 60 Minuten. Nach einer Freibewitterung von 6 Monaten wurde keine Reduzierung der Feuerwiderstandszeit festgestellt. Diese Brandprüfungen würden mit einer Trockenfilmdicke von 4,2mm durchgeführt. Im Vergleich zur Referenz (Beispiel 2) wurde eine Verbesserung der Leistungsfähigkeit um 16% erzielt.

### Beispiel 6 (Erfindung):

Es wurden folgende Substanzen nacheinander mittels eines hochscherenden Dissolvers vermischt und anschließend mittels Airless Applikation auf die entsprechenden Prüfkörper aufgetragen. Hierbei wurden die gleichen Bedingungen wie in Beispiel 1 angewendet.
25 Gewichtsteile Exolit AP422
16 Gewichtsteile Vinnapas EZ 3010
10 Gewichtsteile Silres MP 50 E
8 Gewichtsteile Charmor PM40
8 Gewichtsteile Melamin
8 Gewichtsteile Titandioxid
ad 100 Gewichtsteile Wasser, Füll- und Hilfsstoffe.

Die Brandprüfung einer Stahlplatte (495 x 495 x 5mm) analog ISO834 ergab eine Feuerwiderstandszeit von 82 Minuten (T_{kritisch} = 500°C). Die entstandene Schaumstruktur war sehr stabil und besonders schnittfest. Die gleiche Rezeptur ergab nach einer 6-monatigen Freibewitterung noch eine Feuerwiderstandszeit von 79 Minuten. Diese Brandprüfungen wurden mit einer Trockenfilmdicke von 1000µm durchgeführt. Im Vergleich zur Referenz (Beispiel 1) wurde eine Verbesserung der Leistungsfähigkeit von 22% (Nullprobe) und 55% (nach Bewitterung) erzielt.

Die gleiche Rezeptur, appliziert mit einer Trockenschichtdicke von 2000µm auf einer Rundstütze (Profilfaktor U/A=160m⁻¹), führte zu einer 30-minütigen Brandschutzleistung, da die expandierende isolierende Schaumschicht nicht aufriss.

Die gleiche Rezeptur, appliziert mit einer Trockenschichtdicke von 1500µm auf einem Wabenprofil (U/A=152m⁻¹), führte zu einer 60-minütigen Brandschutzleistung, da die expandierende isolierende Schaumschicht an den Lochkanten nicht aufriss.

### Beispiel 7 (Erfindung):

Es wurden folgende Substanzen nacheinander mittels eines hochscherenden Dissolvers vermischt und anschließend mittels Airless Applikation auf die entsprechenden Prüfkörper aufgetragen. Hierbei wurden die gleichen Bedingungen wie in Beispiel 1 angewendet.
25 Gewichtsteile Exolit AP462
20 Gewichtsteile Vinnapas EZ 3010
6 Gewichtsteile Silres SB45
8 Gewichtsteile Charmor PM40
8 Gewichtsteile Melamin
8 Gewichtsteile Titandioxid
ad 100 Gewichtsteile Wasser, Füll- und Hilfsstoffe.

Diese Rezeptur zeichnet sich dadurch aus, dass sie frei von organischen Lösungsmitteln ist.

Die Brandprüfung einer Stahlplatte (495 x 495 x 5mm) analog ISO834 ergab eine Feuerwiderstandszeit von 86 Minuten (T_{kritisch} = 500°C). Die entstandene Schaumstruktur war sehr stabil und besonders schnittfest. Die gleiche Rezeptur ergab nach einer 6-monatigen Freibewitterung noch eine Feuerwiderstandszeit von 86 Minuten. Diese Brandprüfungen wurden mit einer Trockenfilmdicke von 1000µm durchgeführt. Im Vergleich zur Referenz (Beispiel 1) wurde eine Verbesserung der Leistungsfähigkeit von 28% (Nullprobe) und 69% (nach Bewitterung) erzielt.

Die gleiche Rezeptur, appliziert mit einer Trockenschichtdicke von 2000µm auf einer Rundstütze (Profilfaktor U/A=160m⁻¹), führte zu einer 33-minütigen Brandschutzleistung, da die expandierende isolierende Schaumschicht nicht aufriss.

Die gleiche Rezeptur, appliziert mit einer Trockenschichtdicke von 1500µm auf einem Wabenprofil (U/A=152m⁻¹), führte zu einer 62-minütigen Brandschutzleistung, da die expandierende isolierende Schaumschicht an den Lochkanten nicht aufriss.

Es wird abschließend noch einmal darauf hingewiesen, dass es sich bei den vorhergehenden detaillierten Zusammensetzungen und Beschichtungen lediglich um bevorzugte Ausführungsbeispiele handelt, welche vom Fachmann in verschiedenster Weise modifiziert werden können, ohne den Bereich der Erfindung zu verlassen, soweit er durch die Ansprüche vorgegeben ist. Insbesondere können andere Konzentrationen der jeweiligen Komponenten verwendet werden, solange die Verbindung eine ausreichende Brandschutzeignung aufweist. Die erfindungsgemäßen Zusammensetzungen können bevorzugt als dämmschichtbildende Brandschutzbeschichtungen eingesetzt werden, zum Beispiel um den Wärmedurchtritt auf Stahl- und Aluminiumkonstruktionen, Decken, Wände, Kabel, Rohre und dergleichen im Brandfall zu verhindern. Aus den Beispielen kann man gut erkennen, dass die erfindungsgemäßen Zusammensetzungen nach der Aufbringung als Brandschutzbeschichtung zum einen eine verbesserte Bewitterungsstabilität aufweisen, andererseits als sogenannte einkomponentige, intumeszierende Brandschutzbeschichtungen die Brandschutzanforderungen an industrielle Konstruktionselemente (Hydrocarbon Fire) erfüllen und gleichzeitig verbesserte Feuerwiderstandszeiten (FWZ) bei geringen Schichtdicken auf unterschiedlichen Werkstoffen und Untergründen liefern.

Außerdem konnte unter anderem gezeigt werden, dass mit den erfindungsgemäßen Zusammensetzungen eine signifikant verbesserte Brandschutzleistung auf zum Beispiel Hohl- und Wabenprofilen erreicht wird. Insbesondere wird das partielle Abfallen der Isolationsschicht an den Kanten eines Wabenprofils oder Hohlkörpers bei Verwendung der erfindungsgemäßen Zusammensetzung oder Brandschutzbeschichtung verhindert. Ebenfalls wird die typischerweise stark ausgeprägte Rissbildung der Dämmschicht bei der Verwendung von Hohlkörpern oder Wabenprofilen durch die erfindungsgemäße Zusammensetzung verhindert.

Aufgrund der besonderen mechanischen Stabilität der aus einer erfindungsgemäßen Zusammensetzung hergestellten Dämmschicht erfüllt die Brandschutzbeschichtung mit einer Silikonharz-Bindemittelkomponente auch die Anforderungen eines Hydrokarbon-Brandes nach UL1709 (UL = Underwriters Laboratories). Dies konnte durch die vorstehenden Beispiele sehr gut gezeigt werden, wobei die gleichen oder ähnliche Brandschutzleistungen auch für andere Konzentrationsbereiche und Kombinationen an Inhaltsstoffen erreicht werden, solange mindestens eine Silikonharz-Emulsion als Bindemittel umfasst ist.

## Patentansprüche

1. Zusammensetzung für eine wässerige dämmschichtbildende Brandschutzbeschichtung, die mindestens eine Silikonharz-Emulsion als Bindemittel, Titandioxid und eine säurespendende Substanz, ausgewählt aus Ammoniumsalzen von Phosphorsäuren und/oder Polyphosphorsäuren oder Ammoniumpolyphosphaten der Formel (NH₄PO₃)ₙ, worin n eine Zahl von 10 bis ≥ 1000 ist, und ein im Brandfall schaumbildendes Mittel umfasst.

2. Zusammensetzung für eine dämmschichtbildende Brandschutzbeschichtung nach Anspruch 1, wobei die Zusammensetzung Feststoff-Additive als schaumbildendes Mittel umfasst.

3. Zusammensetzung für eine dämmschichtbildende Brandschutzbeschichtung nach Anspruch 1 oder 2, wobei die Silikonharz-Emulsion wässeriger Natur ist und einen Anteil an organischem Lösungsmittel - bevorzugt aromatische Kohlenwasserstoffe, Alkohole und/oder Poylether - von 0 - 25% enthält.

4. Zusammensetzung für eine dämmschichtbildende Brandschutzbeschichtung nach einem der vorhergehenden Ansprüche, wobei es sich bei der Silikonharz-Emulsion um Polysiloxane, Silan-Siloxan-Mischungen und/oder modifizierte Polysiloxane handelt.

5. Zusammensetzung für eine dämmschichtbildende Brandschutzbeschichtung nach einem der vorhergehenden Ansprüche, wobei das Bindemittel neben der Silikonharz-Emulsion eine wässerige organische Polymerdispersion in beliebigen Mischungsverhältnissen umfasst, wobei die organische Polymerdispersion eine Dispersion aus einem oder mehreren der folgenden Polymerkomponenten ist:
Homopolymerisaten auf Basis Vinylacetat,
Copolymerisaten auf Basis Vinylacetat, Ethylen und Vinylchlorid,
Copolymerisaten auf Basis Vinylacetat und dem Vinylester einer langkettigen,
verzweigten Carbonsäure,
Copolymerisaten auf Basis Vinylacetat und Maleinsäure-di-n-Butylester,
Copolymerisaten auf Basis Vinylacetat und Acrylsäureester,
Copolymerisaten auf Basis Styrol und Acrylsäureester,
Copolymerisaten auf Basis Acrylsäureester,
Copolymerisate auf Basis Vinyltoluol und Acrylsäureester,

6. Zusammensetzung für eine dämmschichtbildende Brandschutzbeschichtung nach einem der vorhergehenden Ansprüche, **dadurch gekennzeichnet, dass** sie
1 bis 75 Gewichtsteile eines filmbildenden Bindemittels nach Anspruch 3-5,
5 bis 50 Gewichtsteile einer säurespendenden Substanz,
5 bis 25 Gewichtsteile einer kohlenstoffbildenden Substanz,
5 bis 25 Gewichtsteile eines Treibmittels, und
10 bis 50 Gewichtsteile an üblichen Hilfs- und Zusatzstoffen
enthält.

7. Zusammensetzung für eine dämmschichtbildende Brandschutzbeschichtung nach einem der vorhergehenden Ansprüche, wobei sie eine kohlenstoffbildende Substanz umfasst, ausgewählt aus Kohlenhydraten, insbesondere Pentaerythrit, Dipentaerythrit, Tripentaerythrit und/oder Polykondensaten des Pentaerythrits; Stärke und Blähgraphit.

8. Zusammensetzung für eine dämmschichtbildende Brandschutzbeschichtung nach einem der vorhergehenden Ansprüche, wobei sie ein Treibmittel umfasst, ausgewählt aus Melamin und/oder Guanidin sowie deren Salze und/oder Dicyandiamide, sowie Tris(hydroxyethyl)isocyanurat und dessen Derivate, und wobei optional als Melaminsalze Melaminphoshat, Melamincyanurat, Melaminborat, Melaminpolyphosphat, Melaminsilikat und als Guanidinsalze Guanidinphosphat eingesetzt werden.

9. Zusammensetzung für eine dämmschichtbildende Brandschutzbeschichtung nach einem der vorhergehenden Ansprüche, die zusätzlich ein oder mehrere Hilfs- und Zusatzstoffe umfasst, ausgewählt aus Pigmenten, Glasfasern, Mineralfasern, Kaolin, Talkum, Aluminiumoxid, Aluminiumhydroxid, Magnesiumhydroxid, Fällungskieselsäuren, Silikaten und/oder pulverisierten Cellulosen, Phosphinsäuresalze und/oder Diphosphinsäuresalze und/oder deren Polymere, Weichmachern, Filmbildehilfsmitteln, Thixotropiermitteln, Netz- und Dispergiermitteln und Konservierungsmitteln.

10. Brandschutzbeschichtung, hergestellt durch physikalisches Trocknen einer Schicht einer Zusammensetzung nach einem der vorhergehenden Ansprüche, insbesondere durch Verdunsten des oder eines Teils des darin enthaltenen Lösungsmittels, wobei die Brandschutzbeschichtung mindestens ein Silikonharz als Bindemittel umfasst.

11. Verwendung einer Zusammensetzung für eine dämmschichtbildende Brandschutzbeschichtung nach einem der Ansprüche 1 bis 9 in Form eines streich-, spritz- oder rollfähigen Anstrichmittels zum Schutz von unterschiedlichsten Untergründen, vorzugsweise von Stahl, Aluminium, Holz, Beton, Elektrokabeln und Rohren, oder für die Beschichtung von offenen Stahlprofilen, geschlossenen und/oder wabenförmigen Profilen, oder für Werkstattapplikationen.

12. Herstellungsverfahren für eine Zusammensetzung für eine dämmschichtbildende Brandschutzbeschichtung nach einem der Ansprüche 1 bis 9, **dadurch gekennzeichnet, dass** eine Silikonharz-Emulsion als ein Bindemittel mit einem im Brandfall schaumbildenden Mittel in einem hochscherenden Dissolver vermischt werden.

13. Herstellungsverfahren für eine Zusammensetzung für eine dämmschichtbildene Brandschutzbeschichtung nach Anspruch 12, **dadurch gekennzeichnet, dass** die Dispergierung in einem hochscherendem Dissolver in der Art durchgeführt wird, dass die Temperatur der Zusammensetzung von T=50°C bis T=40°C während des gesamten Herstellprozesses nicht überschritten wird.

## Claims

1. Composition for an aqueous intumescent fire protection coating comprising at least one silicone resin emulsion as a bonding agent, titanium dioxide and an acid-producing substance selected from ammonium salts of phosphoric acids and/or polyphosphoric acids or ammonium polyphosphates of formula (NH₄PO₃)ₙ, where n is a number from 10 to ≥ 1000, and an agent which produces foam in the event of a fire.

2. Composition for an intumescent fire protection coating as claimed in claim 1, wherein the composition comprises solid additives as foam-producing agents.

3. Composition for an intumescent fire protection coating as claimed in claim 1 or 2, wherein the silicone resin emulsion is of an aqueous nature and contains organic solvent - preferably aromatic hydrocarbons, alcohols and/or polyether - in a proportion of 0 - 25%.

4. Composition for an intumescent fire protection coating as claimed in one of the preceding claims, wherein the silicone resin emulsion consists of polysiloxanes, silane-siloxane mixtures and/or modified polysiloxanes.

5. Composition for an intumescent fire protection coating as claimed in one of the preceding claims, wherein in addition to the silicone resin emulsion, the bonding agent comprises an aqueous organic polymer dispersion based on any mixture ratio and the organic polymer dispersion is a dispersion of one or more of the following polymer components:
homopolymers with a base of vinyl acetate,
copolymers with a base of vinyl acetate, ethylene and vinyl chloride,
copolymers with a base of vinyl acetate and the vinyl ester of a long-chained, branched carboxylic acid,
copolymers with a base of vinyl acetate and maleic acid-di-n-butyl ester,
copolymers with a base of vinyl acetate and acrylic acid ester,
copolymers with a base of styrene and acrylic acid ester,
copolymers with a base of acrylic acid ester,
copolymers with a base of vinyl toluene and acrylic acid ester.

6. Composition for an intumescent fire protection coating as claimed in one of the preceding claims, **characterised in that** it contains:
1 to 75 parts by weight of a film-forming bonding agent as claimed in claims 3-5,
5 to 50 parts by weight of an acid-producing substance,
5 to 25 parts by weight of a carbon-forming substance,
5 to 25 parts by weight of a propellant, and
10 to 50 parts by weight of standard excipients and additives.

7. Composition for an intumescent fire protection coating as claimed in one of the preceding claims, wherein it comprises a carbon-forming substance selected from carbohydrates, in particular pentaerythritol, dipentaerythritol, tripentaerythritol and/or polycondensates of pentaerythritol, starch and expandable graphite.

8. Composition for an intumescent fire protection coating as claimed in one of the preceding claims, wherein it comprises a propellant selected from melamine and/or guanidine as well as salts thereof and/or dicyandiamides, as well as tris(hydroxyethyl)isocyanurate and derivatives thereof, and wherein optionally melamine phosphate, melamine cyanurate, melamine borate, melamine polyphosphate, melamine silicate are used as melamine salts and guanidine phosphate is used as guanidine salts.

9. Composition for an intumescent fire protection coating as claimed in one of the preceding claims, which additionally comprises one or more excipients and additives selected from pigments, glass fibres, mineral fibres, kaolin, talc, aluminium oxide, aluminium hydroxide, magnesium hydroxide, precipitated silica, silicates and/or pulverised celluloses, phosphinic acid salts and/or diphosphinic acid salts and/or polymers thereof, plasticisers, film-forming agents, thixotropic agents, wetting agents and dispersants and preservatives.

10. Fire protection coating, produced by physically drying a layer of a composition as claimed in one of the preceding claims, in particular by evaporating the or some of the solvent contained therein, wherein the fire protection coating comprises at least one silicone resin as a bonding agent.

11. Use of a composition for an intumescent fire protection coating as claimed in one of claims 1 to 9 in the form of a paintable, sprayable or rollable coating compound for protecting various underlying surfaces, preferably of steel, aluminium, wood, concrete, electric cables and pipes, or for coating open steel profiles, closed and/or castellated profiles, or for workshop applications.

12. Method for producing a composition for an intumescent fire protection coating as claimed in one of claims 1 to 9, **characterised in that** a silicone resin emulsion serving as a bonding agent is mixed in a high-shearing dissolver with an agent which produces foam in the event of a fire.

13. Method for producing a composition for an intumescent fire protection coating as claimed in claim 12, **characterised in that** the dispersion process is operated in a high-shearing dissolver in such a way that the temperature of the composition does not exceed T=50ºC to T=40ºC during the entire production process.

## Revendications

1. Composition pour un revêtement de protection incendie aqueux formant une couche isolante, qui comprend au moins une émulsion de résine silicone en tant que liant, du dioxyde de titane et une substance acidifiante, choisie parmi des sels d'ammonium d'acides phosphoriques et/ou des acides phosphoriques ou des polyphosphates d'ammonium de la formule (NH₄PO₃)ₙ, dans laquelle n est un nombre allant de 10 à ≥ 1000, et un agent moussant en cas d'incendie.

2. Composition pour un revêtement de protection incendie formant une couche isolante selon la revendication 1, dans laquelle la composition comprend en tant qu'agent moussant des additifs à l'état solide.

3. Composition pour un revêtement de protection incendie formant une couche isolante selon la revendication 1 ou 2, dans laquelle l'émulsion de résine silicone est de nature aqueuse et contient une fraction en solvant organique - de manière préférée des hydrocarbures aromatiques, des alcools et/ou des polyéthers, de 0 - 25 %.

4. Composition pour un revêtement de protection incendie formant une couche isolante selon l'une quelconque des revendications précédentes, dans laquelle l'émulsion de résine silicone est des polysiloxanes, des mélanges de silane-siloxane et/ou des polysiloxanes modifiés.

5. Composition pour un revêtement de protection incendie formant une couche isolante selon l'une quelconque des revendications précédentes, dans laquelle le liant comprend, outre l'émulsion de résine silicone, une dispersion polymère organique aqueuse en des rapports de mélange quelconques, dans laquelle la dispersion polymère organique est une dispersion composée d'un ou de plusieurs des composants polymères suivants :
des homopolymérisats à base d'acétate de vinyle,
des copolymérisats à base d'acétate de vinyle, d'éthylène et de chlorure de vinyle,
des copolymérisats à base d'acétate de vinyle et d'ester de vinyle d'un acide carboxylique ramifié à longue chaîne,
des copolymérisats à base d'acétate de vinyle et d'acide maléique-di-n-butylester,
des copolymérisats à base d'acétate de vinyle et d'ester d'acide acrylique,
des copolymérisats à base de styrène et d'ester d'acide acrylique,
des copolymérisats à base d'ester d'acide acrylique,
des copolymérisats à base de vinyltoluène et d'ester d'acide acrylique.

6. Composition pour un revêtement de protection incendie formant une couche isolante selon l'une quelconque des revendications précédentes, **caractérisée en ce qu'**elle contient
1 à 75 parties en poids d'un liant filmogène selon la revendication 3 - 5,
5 à 50 parties en poids d'une substance acidifiante,
5 à 25 parties en poids d'une substance formant du carbone,
5 à 25 parties en poids d'un agent porogène, et
10 à 50 parties en poids d'adjuvants et d'additifs habituels.

7. Composition pour un revêtement de protection incendie formant une couche isolante selon l'une quelconque des revendications précédentes, dans laquelle elle comprend une substance formant du carbone choisie parmi des hydrates de carbone, en particulier le pentaérythritol, le dipentaérythritol, tripentaérythritol et/ou les polycondensats du pentaérythritol ; l'amidon et le graphite expansé.

8. Composition pour un revêtement de protection incendie formant une couche isolante selon l'une quelconque des revendications précédentes, dans laquelle elle comprend un agent porogène choisi parmi la mélamine et/ou la guanidine ainsi que leurs sels et/ou les dicyanodiamides, ainsi que le tris(hydroxyéthyl)isocyanurate et ses dérivés, et dans laquelle en option sont utilisés en tant que sels de mélamine, le phosphate de mélamine, le cyanurate de mélamine, le borate de mélamine, le polyphosphate de mélamine, le silicate de mélamine et en tant que sels de guanidine, le phosphate de guanidine.

9. Composition pour un revêtement de protection incendie formant une couche isolante selon l'une quelconque des revendications précédentes, qui comprend en supplément un ou plusieurs adjuvants ou additifs choisis parmi les pigments, les fibres de verre, les fibres minérales, le kaolin, le talc, l'oxyde d'aluminium, l'hydroxyde d'aluminium, l'hydroxyde de magnésium, les acides siliciques précipités, les silicates et/ou les celluloses pulvérisées, les sels d'acide phosphinique et/ou les sels d'acide diphosphinique et/ou leurs polymères, les plastifiants, les produits auxiliaires filmogènes, les agents thixotropes, les agents mouillants et dispersants et les agents de conservation.

10. Revêtement de protection incendie fabriqué par séchage physique d'une couche d'une composition selon l'une quelconque des revendications précédentes, en particulier par évaporation du ou d'une partie du solvant contenu dans celle-ci, dans lequel le revêtement de protection incendie comprend en tant que liant au moins une résine silicone.

11. Utilisation d'une composition pour un revêtement de protection incendie selon l'une quelconque des revendications 1 à 9 sous la forme d'une peinture pouvant être étalée, pulvérisée ou roulée servant à protéger des supports les plus variés, de préférence de l'acier, de l'aluminium, du bois, du béton, des câbles électriques et des tuyaux, ou pour le revêtement de profilés en acier ouverts, de profilés fermés et/ou en en forme de nid d'abeilles, ou pour des applications en atelier.

12. Procédé de fabrication pour une composition pour un revêtement de protection incendie formant une couche isolante selon l'une quelconque des revendications 1 à 9, **caractérisé en ce qu'**une émulsion de résine silicone est mélangée en tant qu'un liant à un agent moussant en cas d'incendie dans un bac de dissolution à cisaillement élevé.

13. Procédé de fabrication pour une composition pour un revêtement de protection incendie formant une couche isolante selon la revendication 12, **caractérisé en ce que** la dispersion est effectuée dans un bac de dissolution à cisaillement élevé de telle manière que la température de la composition allant de T = 50 °C à T = 40 °C n'est pas dépassée au cours de la totalité du processus de fabrication.
